(19) **Europäisches Patentamt European Patent Office Office européen des brevets**

(11) **EP 4 627 971 A1**

(12) **EUROPEAN PATENT APPLICATION**
published in accordance with Art. 153(4) EPC

(43) Date of publication:
08.10.2025 Bulletin 2025/41

(21) Application number: 23897289.7

(22) Date of filing: 18.10.2023

(51) International Patent Classification (IPC):
*A47F 3/04* [(2006.01)]   *F25D 11/00* [(2006.01)]
*F16L 59/065* [(2006.01)]

(52) Cooperative Patent Classification (CPC):
**A47F 3/04; F16L 59/065; F25D 11/00;**
Y02A 30/249; Y02B 80/22

(86) International application number:
**PCT/JP2023/037651**

(87) International publication number:
**WO 2024/116632 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 30.11.2022 JP 2022192461

(71) Applicant: **Panasonic Intellectual Property Management Co., Ltd.**
**Kadoma-shi, Osaka 571-0057 (JP)**

(72) Inventors:
• **ISHIBASHI, Tasuku**
**Kadoma-shi, Osaka 571-0057 (JP)**

• **ABE, Hiroyuki**
**Kadoma-shi, Osaka 571-0057 (JP)**
• **KOSUGI, Naoki**
**Kadoma-shi, Osaka 571-0057 (JP)**
• **INOUE, Tatsuji**
**Kadoma-shi, Osaka 571-0057 (JP)**
• **URIU, Eiichi**
**Kadoma-shi, Osaka 571-0057 (JP)**
• **HASEGAWA, Kenji**
**Kadoma-shi, Osaka 571-0057 (JP)**
• **OFUJI, Masaaki**
**Kadoma-shi, Osaka 571-0057 (JP)**

(74) Representative: **Müller-Boré & Partner Patentanwälte PartG mbB Friedenheimer Brücke 21 80639 München (DE)**

(54) **COOLING/WARMING APPARATUS**

(57)    A cooling/warming apparatus whose thermal insulation performance is less likely to degrade is provided. A refrigeration and freezing apparatus (1) includes a body case (2) and a vacuum insulated glass plate (4). The vacuum insulated glass plate (4) is attached to an upper end of the body case (2). The vacuum insulated glass plate (4) has a thermal transmittance less than 1.4 W/m²·K and is attached to the body case (2) at an angle smaller than or equal to 60° with respect to the horizontal plane.

FIG. 2

EP 4 627 971 A1

## Description

### Technical Field

The present disclosure generally relates to cooling/warming apparatuses and more specifically relates to a cooling/warming apparatus which allows an item stored therein to be viewed through a glass plate.

### Background Art

Patent Literature 1 discloses a refrigeration showcase having an upper surface provided with a freely openable and closeable glass door, and thus, workers and/or consumers can easily identify items in the showcase from above.

### Citation List

### Patent Literature

Patent Literature 1: JP H07-035467 A

### Summary of Invention

In the refrigeration showcase, however, thermal transmittance is high at the glass door, which may deteriorate thermal insulation performance.

It is an object of the present disclosure to provide a cooling/warming apparatus whose thermal insulation performance is less likely to deteriorate.

A cooling/warming apparatus according to an aspect of the present disclosure includes a body case and a vacuum insulated glass plate. The vacuum insulated glass plate is attached to an upper end of the body case. The vacuum insulated glass plate has a thermal transmittance less than 1.4 $W/m^2 \cdot K$ and is attached to the body case at an angle of smaller than or equal to 60° with respect to a horizontal plane.

The thermal insulation performance of the cooling/warming apparatus according to an aspect of the present disclosure is less likely to deteriorate.

### Brief Description of Drawings

FIG. 1 is a schematic perspective view of a refrigeration and freezing apparatus (a cooling/warming apparatus) according to a first embodiment;

FIG. 2 is a schematic sectional view of the refrigeration and freezing apparatus;

FIG. 3 is a block diagram of a control configuration of the refrigeration and freezing apparatus;

FIG. 4 is a sectional view of a vacuum insulated glass plate of the refrigeration and freezing apparatus;

FIG. 5 is a plan view of the vacuum insulated glass plate;

FIG. 6 is a schematic sectional view of a refrigeration and freezing apparatus according to a second embodiment;

FIG. 7 is a schematic sectional view of a refrigeration and freezing apparatus according to a third embodiment;

FIG. 8 is a schematic partial sectional view of a deformed vacuum insulated glass plate according to the third embodiment;

FIG. 9 is a schematic sectional view of a refrigeration and freezing apparatus according to a fourth embodiment;

FIG. 10 is a schematic sectional view of a refrigeration and freezing apparatus according to a fifth embodiment;

FIG. 11 is a partial sectional view of a vacuum insulated glass plate of a refrigeration and freezing apparatus according to a sixth embodiment;

FIG. 12 is a partial plan view of the vacuum insulated glass plate according to the sixth embodiment;

FIG. 13 is a schematic portion sectional view of a vacuum insulated glass plate (in a flat state) of a refrigeration and freezing apparatus according to a seventh embodiment;

FIG. 14 is a schematic sectional view of the vacuum insulated glass plate (in a buckling state) according to the seventh embodiment;

FIG. 15 is a schematic sectional view of a vacuum insulated glass plate (in a buckling state) as a comparative example;

FIG. 16 is a schematic sectional view of a refrigeration and freezing apparatus according to an eighth embodiment;

FIG. 17 is a schematic sectional view of a refrigeration and freezing apparatus (cabinet storage-type) according to a ninth embodiment; and

FIG. 18 is a schematic sectional view of a refrigeration and freezing apparatus according to a tenth embodiment.

**Description of Embodiments**

A refrigeration and freezing apparatus (an example of a cooling/warming apparatus) according to embodiments will be described below with reference to the drawings. Figures to be described in the following embodiments are schematic representations. Thus, the ratios of size and thickness of constituent elements in the figures are not always to scale, compared with actual ones. Moreover, the configurations described below in the embodiments are mere examples of the present disclosure. The present disclosure is not limited to the embodiments described below. The embodiments described below may be modified variously depending on design or the like as long as the effect of the present disclosure is provided.

The present disclosure is widely applicable to cooling/warming apparatuses and is applicable to, for example, refrigerators, wine cabinets, sake cabinets, insulation or refrigeration showcases (food products, beverages, flowers, etc.), hot showcases, medicine storages, environment testers, fermenters, animal observation cases, animal experiment devices, and cold boxes for, for example, fishing.

1. First Embodiment

(1) Basic Configuration of Refrigeration and freezing apparatus

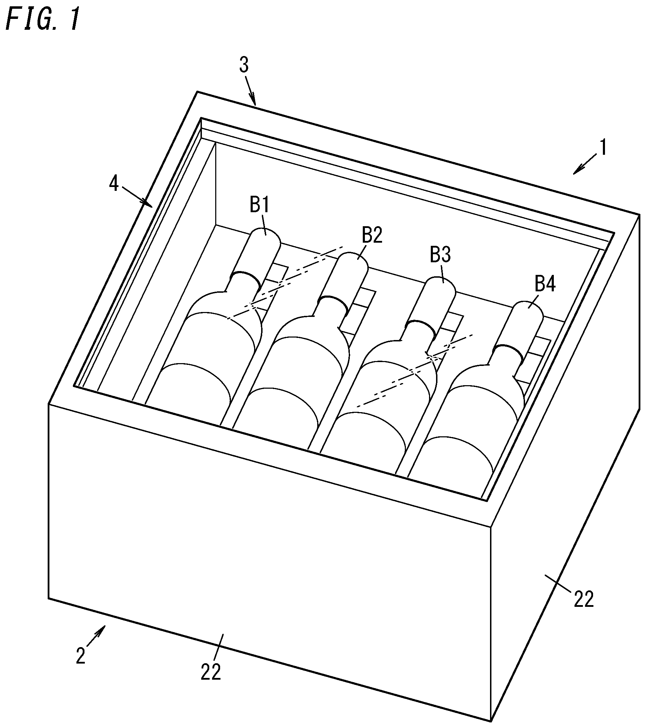

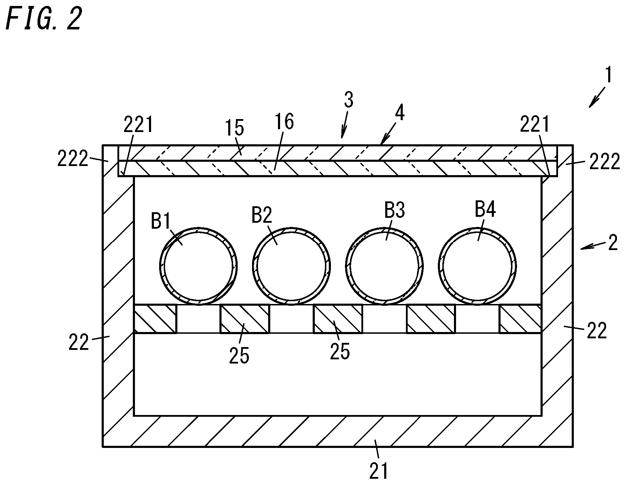

With reference to FIGS. 1 and FIG. 2, a basic configuration of a refrigeration and freezing apparatus 1 (an example of the cooling/warming apparatus) according to a first embodiment will be described. The refrigeration and freezing apparatus 1 is a small desktop-type refrigerator and is used as a wine cabinet. In the refrigeration and freezing apparatus 1, wine bottles B1 to B4 are stored.

The refrigeration and freezing apparatus 1 includes a body case 2 and a top plate part 3. The body case 2 has a bottom surface part 21, four side surface parts 22, and an upper surface as an opening. The body case 2 is made of a resin, metal, or a combination thereof. The top plate part 3 is attached to an upper end of the body case 2. The top plate part 3 mainly includes a vacuum insulated glass plate 4. The vacuum insulated glass plate 4 is transparent or semi-transparent, and, as shown in FIG. 1, a user can externally view the wine bottles B1 to B4 in the interior of the refrigeration and freezing apparatus.

The vacuum insulated glass plate 4 is a fixed glass plate attached to the body case 2. That is, four sides of the vacuum insulated glass plate 4 are fixed via, for example, a seal. Note that the vacuum insulated glass plate 4 may be held in a sash to configure an openable and closable lid.

The vacuum insulated glass plate 4 is horizontally attached to the body case 2. Note that the vacuum insulated glass plate 4 is attached to the body case 2 at least at an angle $\theta$ smaller than or equal to 60° with respect to the horizontal plane. Note that the angle $\theta$ is preferably smaller than or equal to 45°, more preferably smaller than or equal to 30°. Moreover, the angle $\theta$ may be substantially horizontal (e.g., the angle $\theta$ may be 0 to 5°).

More specifically, the side surface parts 22 have upper surfaces having mounting parts 221 forming a rectangular frame and lateral supports 222 forming a rectangular frame and disposed on an outer peripheral side of the mounting parts 221 as shown in FIG. 2. A lower surface of a peripheral portion of the vacuum insulated glass plate 4 is supported from below by the mounting parts 221 via the seal, and an outer peripheral end face of the vacuum insulated glass plate 4 is supported by the lateral supports 222 in the horizontal direction.

In the body case 2 is disposed a wine bottle support 25. The wine bottle support 25 is a plate member having slits formed to support, for example, the wine bottles B1 to B4. The wine bottles B1 to B4 are allowed to be moved in and out through an opening (not shown) formed in one of the side surface parts 22. When the wine bottles B1 to B4 are moved in and out, a lid (not shown) closing the opening formed in the one of the side surface parts 22 is opened and closed. In this case, only the wine bottles B1 to B4 may directly be moved in and out, or the wine bottle support 25 may be moved in and out.

(2) Control Configuration of Refrigeration and Freezing Apparatus

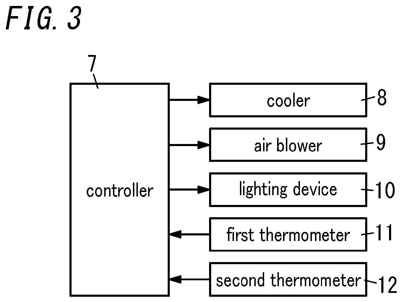

With reference to FIG. 3, a control configuration of the refrigeration and freezing apparatus 1 will be described.

The refrigeration and freezing apparatus 1 includes a controller 7, a cooler 8, an air blower 9, a lighting device 10, a first thermometer 11, and a second thermometer 12.

The controller 7 is a computer including a CPU, memory, and the like and executes a program to carry out various types of control operation.

The cooler 8 is a device for cooling the interior of the body case 2. The cooler 8 may be, for example, a Peltier-type or compressor-type cooler in the case of the wine cabinet.

The air blower 9 is a device for circulating air in the interior of the body case 2. The air blower 9 includes, for example, vanes and a motor.

The lighting device 10 is a device for illuminating the interior of the body case 2. The lighting device 10 includes, for example, LEDs.

The first thermometer 11 is disposed in the upper half of the interior of the body case 2. A single first thermometer 11 may be disposed, or a plurality of first thermometers 11 may be disposed.

The second thermometer 12 is disposed in the lower half of the interior of the body case 2. A single second thermometer 12 may be disposed, or a plurality of second thermometers 12 may be disposed.

The controller 7 sends control signals to the cooler 8, the air blower 9, and the lighting device 10. The controller 7 receives output signals from the first thermometer 11 and the second thermometer 12.


(3) Detailed Description of Vacuum Insulated Glass Plate 4


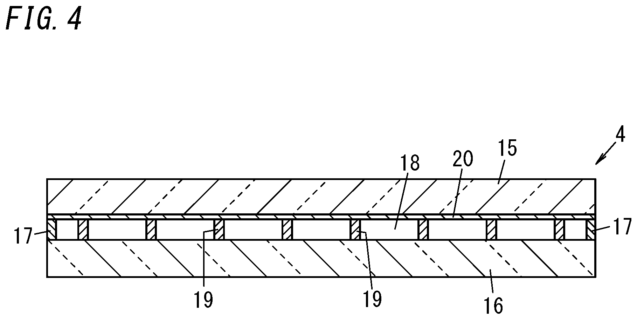

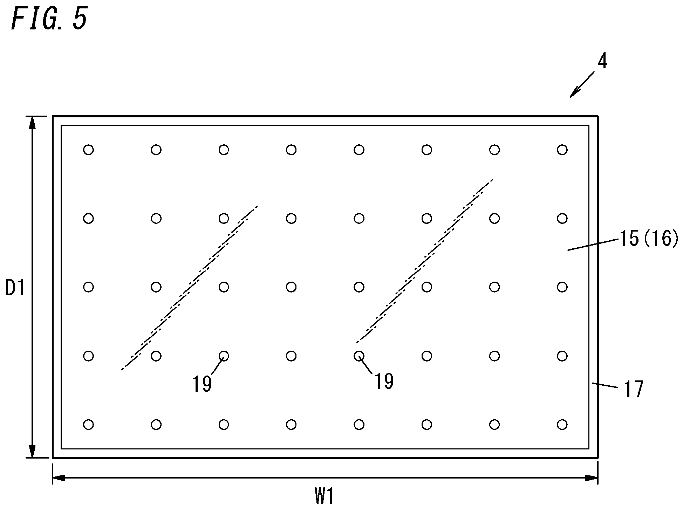

With reference to FIGS. 4 and 5, the vacuum insulated glass plate 4 will be described in detail.

The vacuum insulated glass plate 4 includes: a first glass panel 15; a second glass panel 16 facing the first glass panel 15; a frame 17 which has a frame shape formed to correspond to peripheral portions of the first glass panel 15 and the second glass panel 16 and which bonds the first glass panel 15 and the second glass panel 16 together; and pillars 19 disposed in a vacuum space 18 between the first glass panel 15 and the second glass panel 16. Note that the first glass panel 15 is disposed above the second glass panel 16. The pillars 19 are sandwiched between the first glass panel 15 and the second glass panel 16 to keep the thickness of the vacuum space 18. Since the vacuum space 18 suppresses thermal conduction, the vacuum insulated glass plate 4 has excellent thermal insulation properties.

The first glass panel 15 and the second glass panel 16 are each rectangular. Specifically, the first glass panel 15 and the second glass panel 16 each have a rectangular shape having a long side length W1 and a short side length D1 as shown in FIG. 5. The vacuum insulated glass plate 4 is basically transparent. Therefore, members (the frame 17, the pillars 19, etc.) in the interior of the vacuum insulated glass plate 4 are visible. In FIG. 5, the members in the interior, which are visible, are shown.

Examples of a material for the first glass panel 15 and the second glass panel 16 include soda-lime glass, high strain-point glass, chemically strengthened glass, no-alkali glass, quartz glass, Neoceram, and physically strengthened glass. The thickness of each of the first glass panel 15 and the second glass panel 16 is, for example, within the range from 1 to 10 mm.

In the vacuum space 18, the degree of vacuum is less than or equal to a prescribed value. The prescribed value of the degree of vacuum is, for example, 0.01 Pa. The thickness of the vacuum space 18 is, for example, 10 to 1000 $\mu$m.

Each pillar 19 has a circular column shape. The diameter of each pillar 19 is, for example, 0.1 to 10 mm. The smaller the diameter of each pillar 19, the less noticeable each pillar 19 is. In contrast, the larger the diameter of each pillar 19, the stronger each pillar 19 is. The height of each pillar 19 is, for example, 10 to 1000 $\mu$m. The height of each pillar 19 defines the distance between the first glass panel 15 and the second glass panel 16, that is, the thickness of the vacuum space 18.

The plurality of pillars 19 are arranged at intersections of an imaginary rectangular grating. The pillars 19 are arranged at a pitch of, for example, 10 to 100 mm. The pitch may specifically be 20 mm. The shape, size, number, pitch, arrangement pattern of pillars 19 are not limited to particular examples but may accordingly be selected. The pillars 19 may be in prism or spherical shape.

The pillars 19 are made of a transparent resin and includes, for example, polyimide.

The vacuum insulated glass plate 4 has a thermal transmittance less than 1.4 W/m$^2$·K. The thermal transmittance of the vacuum insulated glass plate 4 is more preferably less than 1.0 W/m$^2$·K, much more preferably less than 0.9 W/m$^2$·K. Keeping such a low thermal transmittance of the vacuum insulated glass plate 4 enables the items in the interior of the refrigeration and freezing apparatus to be efficiently kept cool or warm.

In general, the thermal transmittance of insulating glass including an air layer/gas layer significantly changes depending on the installation angle of the insulating glass due to the influenced of a convection flow of the air layer/gas layer (specifically, when the insulating glass is installed at an angle smaller than or equal to 60° with respect to the horizontal plane, the thermal transmittance decreases, and in particular, when the insulating glass is horizontally installed, the thermal transmittance significantly decreases). In contrast, when the vacuum insulated glass plate is employed, the thermal transmittance is less likely to change depending on the installation angle. Thus, when the vacuum insulated glass plate is employed as in the case of the present embodiment, the thermal transmittance of the vacuum insulated glass plate can be less than 1.4 W/m$^2$·K even when the vacuum insulated glass plate is installed at an angle smaller than or equal to 60° with respect to the horizontal plane.

The first glass panel 15 includes a low-emissivity film 20 (an example of an infrared reflective film) disposed thereon. The low-emissivity film 20 is disposed on an inner surface of the first glass panel 15. The low-emissivity film 20 has light transmitting properties but reflects infrared rays. That is, the low-emissivity film 20 can block infrared rays, which would otherwise enter the vacuum space 18. As a result, heat is less likely to be transmitted in a thickness direction defined with respect to the vacuum insulated glass plate 4, thereby further improving the thermal insulation properties. The low-emissivity film 20 is, for example, a thin film made of metal. The low-emissivity film 20 contains, for example, silver. An example of the low-emissivity film 20 is a Low-E film.

## 2. Second Embodiment

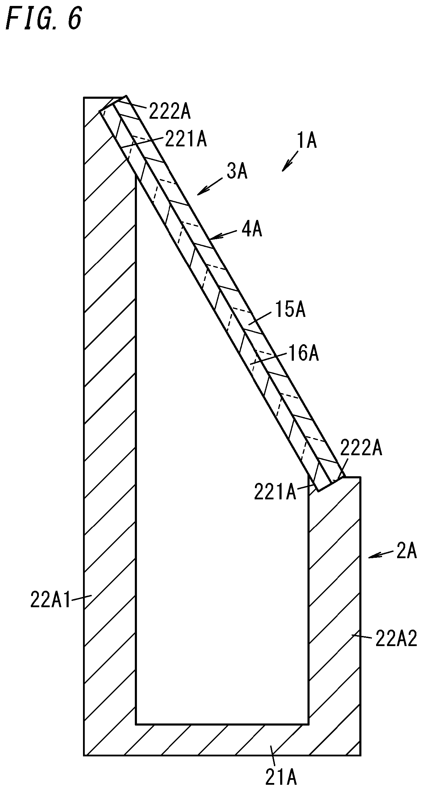

With reference to FIG. 6, a second embodiment will be described.

A vacuum insulated glass plate 4A of a refrigeration and freezing apparatus 1A has a thermal transmittance less than 1.4 W/m$^2 \cdot$K, and thus, in a similar manner to the first embodiment, the vacuum insulated glass plate 4A can efficiently keep items in the interior of the refrigeration and freezing apparatus cool or warm. Note that other basic configurations of the refrigeration and freezing apparatus 1A are the same as those of the first embodiment, and therefore, differences will mainly be described.

The refrigeration and freezing apparatus 1A includes a body case 2A having a first side part 22A1 elongated in an up/down direction and a second side part 22A2 shortened in the up/down direction. Upper surfaces of all side parts including the first side part 22A1 and the second side part 22A2 have: mounting parts 221A forming a rectangular frame; and lateral supports 222A formed on an outer peripheral side of the mounting parts 221A and forming a rectangular frame. In this structure, the vacuum insulated glass plate 4 is attached to the body case 2A obliquely with respect to the horizontal plane (at an angle smaller than or equal to 60° with respect to the horizontal plane) as shown in FIG. 6. Although not shown, upper surfaces of the other two side parts obliquely extend between the upper surfaces of the first side part 22A1 and the second side part 22A2.

## 3. Third Embodiment

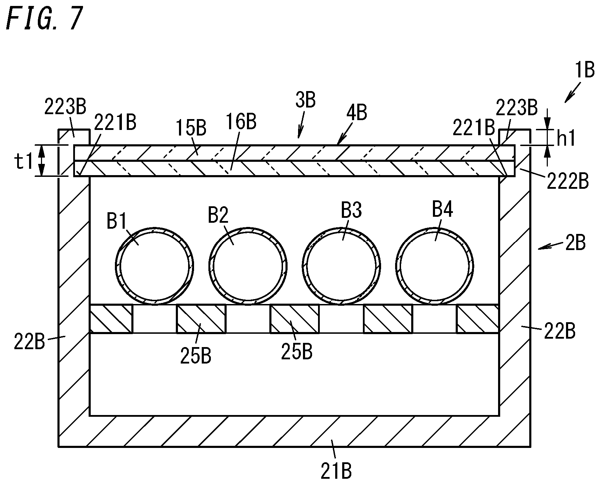

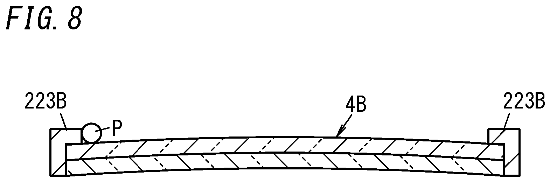

With reference to FIGS. 7 and 8, a third embodiment will be described.

A vacuum insulated glass plate 4B of a refrigeration and freezing apparatus 1B has a thermal transmittance less than 1.4 W/m$^2 \cdot$K, and thus, in a similar manner to the first embodiment, the vacuum insulated glass plate 4B can efficiently keep items in the interior of the refrigeration and freezing apparatus cool or warm. Note that other basic configurations of the refrigeration and freezing apparatus 1B are the same as those of the first embodiment, and therefore, differences will mainly be described.

As shown in FIG. 7, upper surfaces of side surface parts 22B of a body case 2B have mounting parts 221B forming a rectangular frame, lateral supports 222B formed on an outer peripheral side of the mounting parts 221B and forming a rectangular frame, and upper supports 223B (an example of a covering part) extending from upper ends of the upper surfaces toward the center of the body case 2B and forming a rectangular frame. A lower surface of a peripheral portion of the vacuum insulated glass plate 4 is supported by the mounting parts 221B from below, an outer peripheral end face of the vacuum insulated glass plate 4B is supported by the lateral supports 222B in the horizontal direction, and an upper surface of the peripheral portion of the vacuum insulated glass plate 4 is covered by the upper supports 223B from above.

The upper supports 223B suppress the vacuum insulated glass plate 4B from buckling. As a result, the vacuum insulated glass plate 4B is less likely to pop out of the body case 2B. Since the vacuum insulated glass plate generally has the property that the vacuum insulated glass plate buckles in the case of a temperature difference between top and back surfaces thereof, there is conventionally the problem that when the vacuum insulated glass plate is placed on a top surface, the vacuum insulated glass plate tends to stick out upward and thermal buckling causes visual discomfort.

When the thickness of the vacuum insulated glass plate 4B is denoted by t1 (m), the long side length of the vacuum insulated glass plate 4B is denoted by W1 (m), the short side length of the vacuum insulated glass plate 4B is denoted by D1 (m), the shortest distance between an apex of the upper support 223B and the vacuum insulated glass plate 4 is denoted by h1 (mm), and the lowest set temperature in the interior of the body case 2B is denoted by T1 (°C), the upper support 223B is formed such that the following formula 1 is satisfied.

$$ h1 > (1.85\sqrt{(W1^2 + D1^2)} - 0.579) * \sqrt{(T1 - 25)^2 / (1000 * t1)} \cdots \text{Formula 1} $$

As a result, when an item is placed on the vacuum insulated glass plate 4B, the item is less likely to roll on the vacuum insulated glass plate 4B. Moreover, even when the item rolls on the vacuum insulated glass plate 4B, the item is readily held by an inner peripheral end face of the upper support 223B (that is, the item is less likely to fall). Note that formula 1 is a formula in which a confirmatory experiment on, and evaluations of, a thermal buckling amount carried out by the inventors by using vacuum insulated glass plates having various W1, D1, T1, and t1 have identified respective variables and constants thereof.

FIG. 8 shows that a pencil P placed on the vacuum insulated glass plate 4B has rolled to an end of the vacuum insulated glass plate 4B due to buckling of the vacuum insulated glass plate 4B but is held by the upper support 223B.

4. Fourth Embodiment

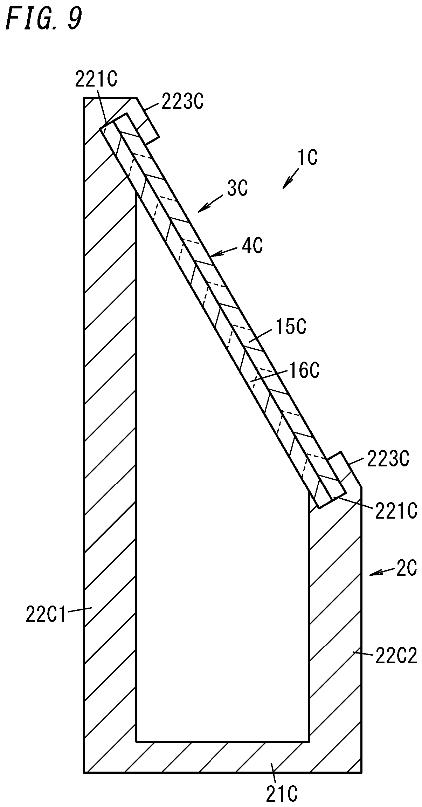

With reference to FIG. 9, a fourth embodiment will be described.

A vacuum insulated glass plate 4C of a refrigeration and freezing apparatus 1C has a thermal transmittance less than 1.4 W/m$^2$·K, and thus, in a similar manner to the first embodiment, the vacuum insulated glass plate 4C can efficiently keep items in the interior of the refrigeration and freezing apparatus cool or warm. Note that other basic configurations of the refrigeration and freezing apparatus 1C are the same as those of the second embodiment, and therefore, differences will mainly be described.

The refrigeration and freezing apparatus 1C includes a body case 2C having a first side part 22C1 elongated in an up/down direction and a second side part 22C2 shortened in the up/down direction. Upper surfaces of all side parts including the first side part 22C1 and the second side part 22C2 have mounting parts 221C forming a rectangular frame and upper supports 223C (an example of a covering part) forming a rectangular frame and disposed on an outer peripheral side of the upper supports 223C. A lower surface of a peripheral portion of the vacuum insulated glass plate 4C is supported by the mounting parts 221C from below, and an upper surface of the peripheral portion of the vacuum insulated glass plate 4C is covered by the upper supports 223C from above. The upper supports 223C suppress the vacuum insulated glass plate 4C from buckling. As a result, the vacuum insulated glass plate 4C is less likely to pop out of the body case 2C.

Moreover, in this structure, the vacuum insulated glass plate 4C is attached to the body case 2C obliquely with respect to the horizontal plane (at an angle smaller than or equal to 60° with respect to the horizontal plane) as shown in FIG. 9. Although not shown, upper surfaces of the other two side parts obliquely extend between the upper surfaces of the first side part 22C1 and the second side part 22C2.

5. Fifth Embodiment

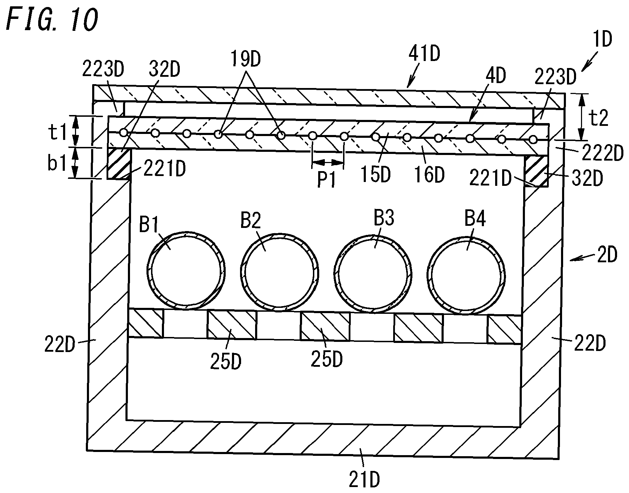

With reference to FIG. 10, a fifth embodiment will be described.

A vacuum insulated glass plate 4D of a refrigeration and freezing apparatus 1D has a thermal transmittance less than 1.4 W/m$^2$·K, and thus, in a similar manner to the first embodiment, the vacuum insulated glass plate 4D can efficiently keep items in the interior of the refrigeration and freezing apparatus cool or warm. Note that other basic configurations of the refrigeration and freezing apparatus are the same as those of the first embodiment, and therefore, differences will mainly be described.

The refrigeration and freezing apparatus 1D further includes a buffer layer 32D disposed under the vacuum insulated glass plate 4D. The buffer layer 32D is made of a material having a lower elastic modulus and lower stiffness than the body case 2D and is made of, for example, an elastic body such as rubber or a resin. Specifically, the buffer layer 32D has a rectangular frame shape and is disposed on mounting parts 221D. The vacuum insulated glass plate 4D has a peripheral portion mounted on the buffer layer 32D. In this way, buckling of the vacuum insulated glass plate 4D can be absorbed by the buffer layer 32D. As a result, a gap between the body case and an end of the vacuum insulated glass plate 4D due to thermal buckling is less likely to be formed, thereby preventing degradation of the thermal insulation properties.

When the thickness of the vacuum insulated glass plate 4B is denoted by t1 (m), the long side length of the vacuum insulated glass plate 4D is denoted by W1 (m), the short side length of the vacuum insulated glass plate 4D is denoted by D1 (m), the lowest set temperature in the interior of the refrigeration and freezing apparatus is denoted by T1 (°C), and the thickness of the buffer layer 32D is denoted by b1 (mm), the buffer layer 32D is formed with the thickness b1 set such that the following formula 2 is satisfied.

$$b1 > (1.85\sqrt{(W1^2 + D^2)} - 0.579) * \sqrt{(T1 - 25)^2/(1000 * t1)} \cdots \text{Formula 2}$$

Formula 2 means that the thickness b1 is greater than the buckling amount of the vacuum insulated glass plate 4D.

The refrigeration and freezing apparatus 1D further includes a top glass plate 41D disposed outside, and apart from, the vacuum insulated glass plate 4D. Specifically, the top glass plate 41D is disposed above, and apart from, the vacuum insulated glass plate 4D and is attached and fixed to upper surfaces of upper supports 223D. Disposing the top glass plate 41D outside the vacuum insulated glass plate 4D as described above enables an upper portion of the refrigeration and freezing apparatus 1D to be flat regardless of the thermal buckling of the vacuum insulated glass plate 4D and the strength of a top plate part of the refrigeration and freezing apparatus 1D to be improved. Note that the top glass plate 41D may be any of, for example, an annealed glass plate, a double-strength glass plate, a physically strengthened glass plate, or a chemically strengthened glass plate and more preferably includes physically strengthened glass or chemically strengthened glass.

When the distance (the shortest distance) between pillars 19D of the vacuum insulated glass plate 4D is denoted by p1, and the distance between a vacuum layer of the vacuum insulated glass plate 4D to an outer surface of the top glass plate 41D is denoted by t2, the distance p1 is set such that the following formula 3 is satisfied.

$$p1 < 6*t2 \cdots \text{Formula 3}$$

Setting the distance p1 to a long distance as described above facilitates diffusion of heat from the pillars 19D in the vacuum insulated glass plate, thereby reducing a temperature difference between the periphery of the pillars 19D and the other portions (homogenizing the temperature at glass surfaces). As a result, condensation on the vacuum insulated glass plate 4D of the refrigeration and freezing apparatus 1D can be reduced. In general, the vacuum insulated glass plate as a whole is highly heat insulating, but there is conventionally the problem that condensation develops only at parts of the vacuum insulated glass plate on the pillars because heat passes the pillars.

Note that combining the features of formula 1 of the third embodiment with the present embodiment enables the vacuum insulated glass plate and the top glass plate to be effectively prevented from coming into contact with each other due to the thermal buckling.

6. Sixth Embodiment

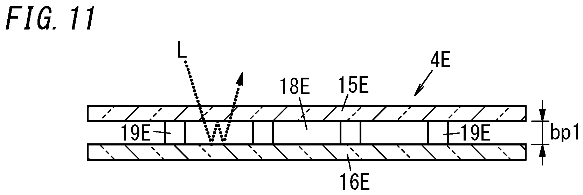

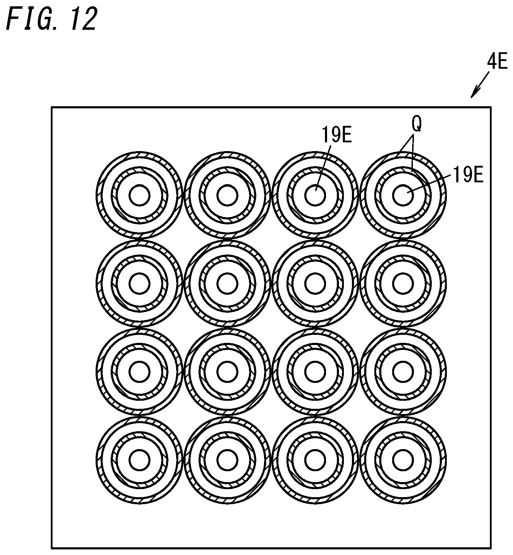

With reference to FIGS. 11 and 12, a sixth embodiment will be described. Note that basic configurations of a refrigeration and freezing apparatus are the same as those of the first embodiment, and therefore, differences will mainly be described.

There is conventionally the problem that in general, when a vacuum insulated glass plate is horizontally placed, an interference fringe is readily perceived. A refrigeration and freezing apparatus 1E according to the present embodiment provides the effect that the configurations (1) to (3) described below make interference fringes Q (see FIG. 12) around pillars 19E less visible. In this case, any one of the configurations (1) to (3) alone provides a satisfactory effect, but a combination of the configurations (1) and (2) enhances the effect, and a combination of the configurations (1), (2), and (3) further enhances the effect.

(1) Pillar Height

As shown in FIG. 11, a vacuum insulated glass plate 4E includes: a first glass panel 15E; a second glass panel 16E; and the plurality of pillars 19E disposed between the first glass panel 15E and the second glass panel 16E. Each pillar 19E has a height hp1 greater than or equal to 50 $\mu$m. This makes the interference fringe Q less visible when external light L is reflected off the first glass panel 15E and the second glass panel 16E, thereby improving the visibility of the interior of the refrigeration and freezing apparatus. Note that more preferably, hp1 $\geq$ 80 $\mu$m, still more preferably, hp1 $\geq$ 100 $\mu$m, much more preferably, hp1 $\geq$ 160 $\mu$m, and particularly preferably, hp1 $\geq$ 240 $\mu$m.

Note that FIG. 12 shows the interference fringes Q visible around the pillars 19E.

Results of an experiment conducted, while the height hp1 is varied, to confirm whether or not the interference fringe is caused are shown in Table 1 below. $\times$ represents an example in which the interference fringe is observable when viewed at an angle smaller than or equal to 30° with respect to the horizontal plane of the vacuum insulated glass plate. $\triangle$ represents an example in which the interference fringe is observable when viewed at an angle smaller than or equal to 60° with respect to the horizontal plane of the vacuum insulated glass plate. $\circ$ represents an example in which the interference fringe is slightly observable only when viewed from the front of the vacuum insulated glass plate, or no interference fringe is observable at all.

[Table 1]

| hp1 ($\mu$m) | Interference Fringe |
|---|---|
| 30 | $\times$ |
| 40 | $\times$ |
| 50 | $\triangle$ |
| 60 | $\triangle$ |
| 80 | $\triangle$ |
| 100 | $\triangle$ |

(continued)

| hp1 (μm) | Interference Fringe |
|----------|---------------------|
| 100 | △ |
| 240 | ○ |

(2) Full Width at Half Maximum of Emission Peak of Lighting Device

In a spectral distribution of light emitted from a lighting device (see the lighting device 10 of FIG. 3) disposed in the body case, a full width at half maximum of one or a plurality of emission peaks in the range from 500 nm to 760 nm is greater than or equal to 30 nm. In general, a peak of the spectral distribution readily causes the interference fringe due to a spectrum peak in the range from 600 nm to 760 nm in which the coherence length is long. Note that in the range from 500 nm to 600 nm, the sensitivity of the human eye is high, and when the interference fringe is caused, the interference fringe is readily perceived. Therefore, the full width at half maximum of the one or more emission peaks in the range from 500 nm to 760 nm is desirably greater than or equal to 30 nm. Note that at 500 nm or shorter, the photopic luminous efficiency function of the human eye is low, and the interference fringe is thus less likely to be viewed.

The full width at half maximum is preferably greater than or equal to 50 nm, more preferably greater than or equal to 80 nm, much more preferably greater than or equal to 100 nm. Note that when in the range from 500 nm to 760 nm, light is emitted but no definite emission peak is present, the full width at half maximum can be deemed to be 260 nm.

(3) Reflectance From Infrared Reflective Film

In the light source spectrum of the lighting device 10, the wavelength of a maximum peak in the range from 500 nm to 760 nm is defined as a wavelength λp. The vacuum insulated glass plate 4E is provided with at least one infrared reflective film (see the low-emissivity film 20 in FIG. 4). Of the two glass panels (glass substrates) included in the vacuum insulated glass plate 4E, a glass panel provided with the infrared reflective film has a reflectance lower than 10% measured at the wavelength λp and on a side on which the infrared reflective film is provided. As a result, in the vacuum insulated glass plate 4E including the infrared reflective film, the interference fringe is less visible, and thereby, the visibility of the interior of the refrigeration and freezing apparatus is improved.

Results of an experiment conducted, while the reflectance is varied, to confirm whether or not the interference fringe is caused are shown in Table 2 below. × represents an example in which the interference fringe is observable when viewed at an angle smaller than or equal to 30° with respect to the horizontal plane of the glass. △ represents an example in which the interference fringe is observable when viewed at an angle smaller than or equal to 60° with respect to the horizontal plane of the glass. ○ represents an example in which the interference fringe is observable when viewed from the front with respect to the horizontal plane of the glass. ◎ represents an example in which no interference fringe is observable when viewed from the front or at any oblique angle with respect to the glass. Note that even in the case of a glass panel provided with no infrared reflective film, slight variations in glass composition, surface cleanness, the level of scratches, or the like may result in different reflectances.

[Table 2]

| hp1 (μm) | Reflectance of infrared reflective film or glass panel at 540 nm | | | |
|----------|------|------|------|------|
| | 6% | 8% | 10% | 12% |
| 30 | × | × | × | × |
| 40 | × | × | × | × |
| 50 | ○ | ○ | △ | △ |
| 60 | ◎ | ○ | △ | △ |
| 80 | ◎ | ◎ | △ | △ |
| 110 | ◎ | ◎ | △ | △ |
| 160 | ◎ | ◎ | △ | △ |
| 240 | ◎ | ◎ | ○ | △ |

(continued)

| | Reflectance of infrared reflective film or glass panel at 540 nm | | | |
|---|---|---|---|---|
| hp1 ($\mu$m) | 6% | 8% | 10% | 12% |
| Note | Infrared Reflective Film A | Without Film (Glass Substrate B) | Without Film (Common Soda-Lime Glass Panel A) | Infrared Reflective Film B |

From the above description, it can be seen that even when hp1 is greater than or equal to 50 $\mu$m, the interference fringe is more likely to be observed in the case of the reflectance being higher than or equal to 10% than in the case of the reflectance being lower than 10%. Further, it can be seen that the reflectance is preferably lower than or equal to 8%, more preferably lower than or equal to 6%.

Note that an infrared reflective film A is made up of ZnO/AG (one layer), and an infrared reflective film B is made up of ZnO/AG (two layers).

When of the two glass panels (glass substrates) included in the vacuum insulated glass plate 4E, one glass panel is provided with an infrared reflective film, and the other glass panel is provided with no infrared reflective film, the reflectance at the wavelength $\lambda$p of the maximum peak in the range from 500 nm to 760 nm in the light source spectrum of the lighting device 10 is lower than 10% at the glass panel provided with the infrared reflective film and is preferably lower than the reflectance of the other glass panel provided with no infrared reflective film. Such a configuration enables the interference fringe to be significantly suppressed from being caused as compared with a common vacuum insulated glass plate.

In general, the infrared reflective film has the effect of suppressing radiant heat transmission by reflecting infrared rays to improve the heat insulative property of the vacuum insulated glass plate. However, a glass panel provided with a high-performance infrared reflective film tends to have high reflectance also in a visible light region as compared to a soda-lime glass panel provided with no infrared reflective film. Therefore, the number, thickness, permittivity, and the like of metal layers (e.g., the Ag layer(s)) and/or dielectric layers of the infrared reflective film is adjusted to provide a phase difference such that light beams reflected off the layers attenuate each other, and thereby, the reflectance at the specific wavelength $\lambda$p can be adjusted. Accordingly selecting an infrared reflective film having appropriate properties can achieve a high infrared ray reflecting performance while the reflectance is lower than or equal to 10% and is smaller than that of the soda-lime glass panel. The thermal transmittance of the vacuum insulated glass plate at this time is desirably less than 1.4 W/m$^2$·K, more desirably less than 1.0 W/m$^2$·K, much more desirably less than 0.9 W/m$^2$·K. To achieve this value, the emittance of a surface which the glass panel provided with the infrared reflective film has and which faces a vacuum layer is desirably less than 0.10, more desirably less than 0.07.

When both the two glass panels are provided with respective infrared reflective films, it is sufficient if at least one glass panel provided with the infrared reflective film has a reflectance lower than 10%.

Moreover, the infrared reflective film(s) may be formed on any one, or both, of the two glass panels, and may be formed on one or both of a surface facing the vacuum layer and a surface not facing the vacuum layer. Note that on at least one glass panel, the reflectance measured on the side of the vacuum layer and at the wavelength $\lambda$p is desirably lower than 10%. Such a configuration enables the interference fringe to be effectively suppressed.

Note that the reflectance at a specific wavelength is obtained by measuring the reflectance of each of the two glass panels included in the vacuum insulated glass plate from the side facing the vacuum layer by using a common spectral photometer (e.g., SolidSpec-3700i DUV manufactured by SHIMADZU CORPORATION) capable of measuring in a visible light region (in measuring, each glass panel does not have to face the vacuum layer, but it is sufficient if the measurement is performed at a surface of each glass panel, the surface being to be in contact with the vacuum layer when the vacuum insulated glass plate is configured). The thermal transmittance of the vacuum insulated glass plate is measured by, for example, a method described in ISO 19916-1:2018.

Moreover, an average reflectance of the glass panel, which is provided with the infrared reflective film, of the two glass panels (glass substrates) included in the vacuum insulated glass plate 4E is desirably lower than 10% in the wavelength range from 500 nm to 760 nm and is lower than the average reflectance of the other glass panel provided with no infrared reflective film. Such a configuration enables the interference fringe also to be suppressed from being caused by various types of lighting fixtures.

The average reflectance of the glass panel is obtained by: measuring the reflectance for a light source wavelength from 500 nm to 760 nm by using a spectral photometer at, for example, 5 nm intervals to obtain values; and averaging the values.

7. Seventh Embodiment

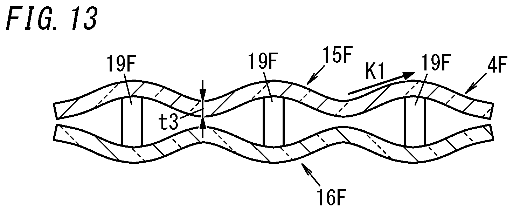

With reference to FIGS. 13 to 15, a seventh embodiment will be described. Note that basic configurations of a refrigeration and freezing apparatus are the same as those of the first embodiment, and therefore, differences will mainly be described.

In a refrigeration and freezing apparatus 1F, when the thickness of a vacuum insulated glass plate 4F is denoted by t1 (m), the long side length of the vacuum insulated glass plate 4F is denoted by W1 (m), the short side length of the vacuum insulated glass plate 4F is denoted by D1 (m), the distance between pillars 19 is denoted by p1 (mm), the thickness of a first glass panel 15 which is the upper one of the first glass panel 15F and a second glass panel 16F of the vacuum insulated glass plate 4F is denoted by t3 (mm), and the lowest set temperature in the interior of t body case 2F is denoted by T1 (°C), the following formula 3 is satisfied.

$$0.00016*p1\textasciicircum3/t3\textasciicircum3/1000 < (1.85\sqrt{(W1\textasciicircum2 + D1\textasciicircum2)} - 0.579) * \sqrt{(T1 - 25)\textasciicircum2}/(1000000 * t1 * D1) \qquad \text{Formula 3}$$

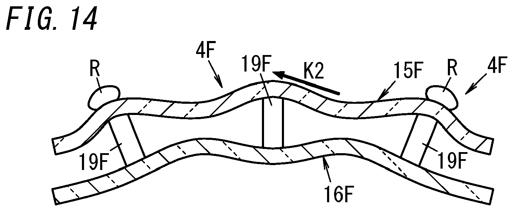

The left side of formula 3 shows a tilt K1 (see FIG. 13) of a recess between the pillars 19F. The tilt K1 is, for example, a value obtained by dividing the height of the recess by a half of the distance between the pillars 19F. The right side of formula 3 shows a tilt K2 (FIG. 14) of the vacuum insulated glass plate 4F caused by thermal buckling. That is, according to formula 3, the tilt K2 of the vacuum insulated glass plate 4F caused by the thermal buckling is set to be greater than the tilt K1 caused by the recess between the pillars 19F.

As described above, the vacuum insulated glass plate 4F of the present embodiment deforms due to the thermal buckling as shown in FIG. 14, and thereby, water R on the vacuum insulated glass plate 4F naturally flows (liquid between the pillars 19F climbs over a projection caused due to the pillar 19F and flows outside) and is eliminated, and therefore, the visibility of the vacuum insulated glass plate 4F is less likely to be degraded.

Conventionally, there is the problem that moisture of beverages spilled onto the vacuum insulated glass plate and/or water caused due to condensation generally remains as it is, and thus, the visibility at a center part of the vacuum insulated glass plate degrades.

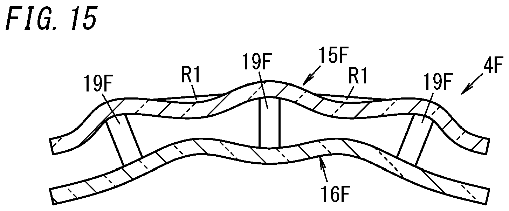

In particular, if formula 3 is not satisfied, liquid (or condensation water) R1 thus spilled remains between the pillars 19F even in the case of the vacuum insulated glass plate 4F deforming due to the thermal buckling as shown in FIG. 15, and consequently, the visibility of the interior degrades.

8. Eighth Embodiment

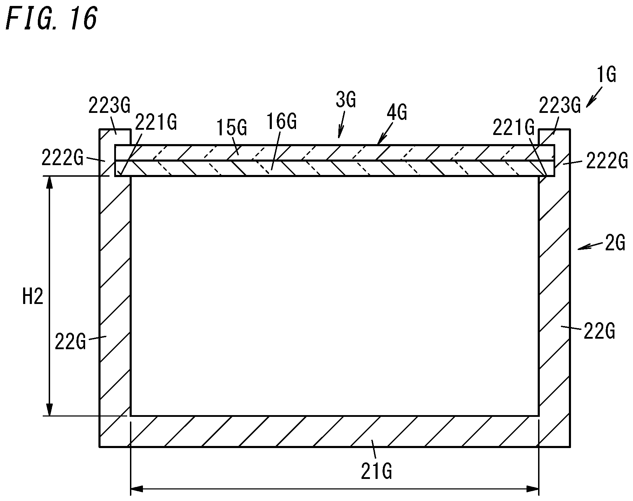

With reference to FIG. 16, an eighth embodiment will be described. Note that basic configurations of a refrigeration and freezing apparatus are the same as those of the first embodiment, and therefore, differences will mainly be described.

Note that in FIG. 16, the drawing is simplified, and components in the interior of a body case are omitted.

A refrigeration and freezing apparatus 1G is flat-type. Specifically, in a body case 2G of the refrigeration and freezing apparatus 1G, a height dimension H2 from a bottom surface part 21 of the body case 2 to a vacuum insulated glass plate 4 is shorter than each of an inner width W2 and a depth D2 (not shown) of the body case 2. Thus, the visibility of the interior of the refrigeration and freezing apparatus is high. Therefore, the refrigeration and freezing apparatus can be used as a showcase to display items in the interior thereof. Specifically, beverage containers and/or wine bottles may be laterally aligned to show their labels.

The refrigeration and freezing apparatus 1G is flat-type and is thus usable as a table. Moreover, the refrigeration and freezing apparatus 1G is suitably applicable to a desktop-type apparatus.

9. Ninth Embodiment

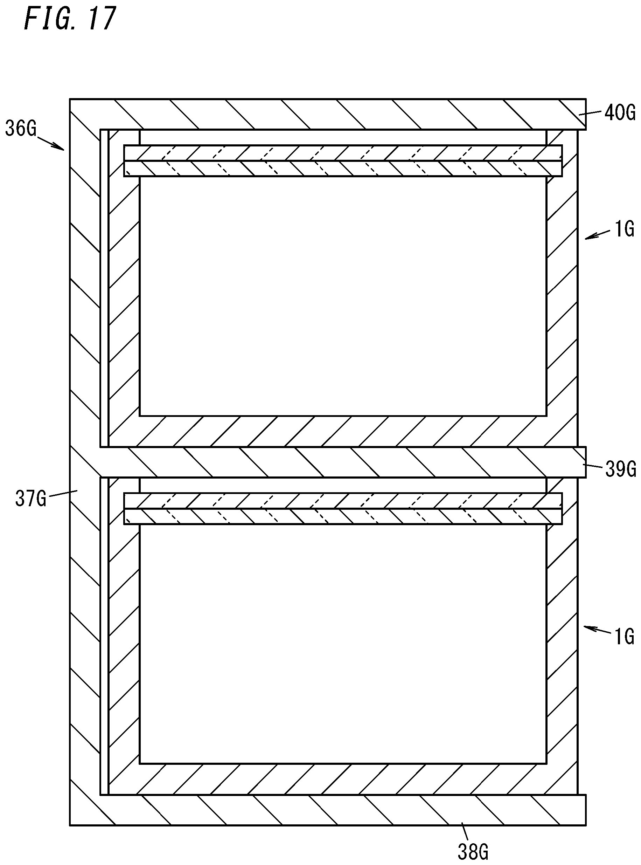

With reference to FIG. 17, a ninth embodiment will be described. Note that basic configurations of a refrigeration and freezing apparatus are the same as those of the first embodiment, and therefore, differences will mainly be described.

Note that in FIG. 17, the drawing is simplified, and components in the interior of a body case of a refrigeration and freezing apparatus 1G are omitted.

FIG. 17 shows two refrigeration and freezing apparatuses 1G stored in a cabinet-type storage 36G.

The cabinet-type storage 36G includes sidewalls 37G, a bottom plate 38G, an intermediate plate 39G, and a top plate 40G. The bottom plate 38G, the intermediate plate 39G, and the top plate 40G are aligned in this order from bottom to top and extend from the sidewalls 37G in the horizontal direction. One refrigeration and freezing apparatus 1G is stored in a space between the bottom plate 38G and the intermediate plate 39G. One refrigeration and freezing apparatus 1G is stored in a space between the intermediate plate 39G and the top plate 40G. The refrigeration and freezing apparatuses 1G function as drawers of the cabinet-type storage 36G. In this case, vacuum insulated glass plates cover respective top surfaces of the drawers. In this case, labels of bottles in all the drawers can be identified in the cabinet-type storage 36G.

The structure of the cabinet and the number of apparatuses which can be stored in the cabinet are not limited to particular examples.

10. Tenth Embodiment

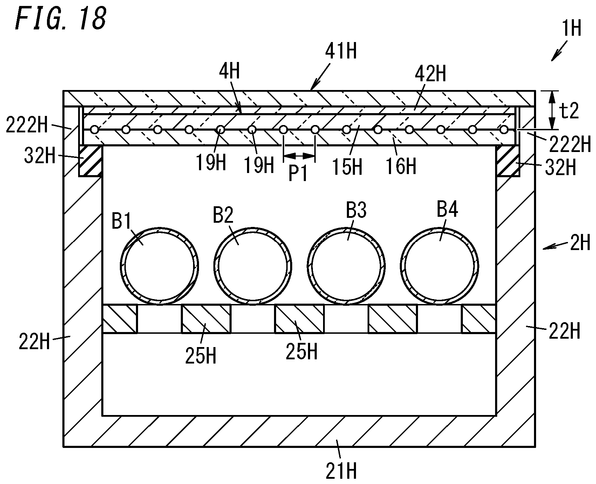

With reference to FIG. 18, a tenth embodiment will be described. Note that basic configurations of a refrigeration and freezing apparatus are the same as those of the first embodiment, and therefore, differences will mainly be described.

A refrigeration and freezing apparatus 1H further includes a top glass plate 41H affixed to an outer side of a vacuum insulated glass plate 4H. Specifically, the top glass plate 41H is affixed to an intermediate film 42H on the vacuum insulated glass plate 4H. This increases the strength of the top glass plate 41H. The intermediate film 42H is, for example, a laminate including a base material layer containing a hard resin and adhesion layers containing an adhesive resin and provided on both surfaces of the base material layer.

Note that the intermediate film is transparent. The intermediate film may have an ultraviolet shielding function. The intermediate film may include a plurality of films.

The top glass plate 41H can suppress thermal buckling of the vacuum insulated glass plate 4H, which enables an upper portion of the refrigeration and freezing apparatus 1H to be flat. This achieves a plain exterior and is thus preferable in terms of design.

When the distance between pillars 19H of the vacuum insulated glass plate 4H is denoted by p1 (shortest distance), and the distance from a vacuum layer of the vacuum insulated glass plate 4H to an outer surface of the top glass plate 41H is denoted by t2, the following formula 4 is satisfied.

$$p1 < 6*t2 \cdots \text{Formula 4}$$

Setting the distance p1 to a long distance as described above facilitates diffusion of heat from the pillars 19H in the vacuum insulated glass plate, thereby reducing a temperature difference between the periphery of the pillars 19H and the other portions (homogenizing the temperature at glass surfaces). As a result, condensation developed on the outer surface of the vacuum insulated glass plate 4H in the periphery of the pillars 19H can be reduced, and it is possible to prevent the problem that when an item is placed on an upper portion of the top glass plate 41H or a person touches the upper portion of the top glass plate 41H, condensation water comes into contact with the item or the person.

(Variations)

The embodiments described above are mere examples of various embodiments of the present disclosure. The embodiments described above may be modified variously depending on design or the like as long as the object of the present disclosure is achieved. Variations of the embodiments described above will be enumerated below. Any of the variations to be described below may be combined as appropriate.

The present disclosure is applicable to cooling/warming apparatuses other than the refrigeration and freezing apparatus.

The refrigeration and freezing apparatus according to the present disclosure is applicable to drawers of a cabinet-type storage. In this case, vacuum insulated glass plates cover respective top surfaces of the drawers. In this case, labels of bottles in all the drawers can be identified in the cabinet-type storage.

As an example, the thickness of a thinner one of the two glass panels included in the vacuum insulated glass plate is less than or equal to 2.8 mm or greater than or equal to 4.7 mm in actual thickness, and the pillar interval is greater than or equal to 10 mm and less than or equal to 50 mm.

As an example, the illuminance at a center part of the vacuum insulated glass plate by an interior lighting fixture is less than 500 lux, and the visible light reflectance of the pillars of the vacuum insulated glass plate is lower than or equal to 75%.

As an example, when an electronic device includes an interior lighting fixture therein, the illuminance of light radiated from the interior lighting fixture onto the center part of the vacuum insulated glass plate is denoted by L, the visible light transmittance measured when a glass panel at a lower surface of the vacuum insulated glass plate to a top glass plate are deemed to be one glass unit is denoted by T, and the visible light reflectance viewed outside the refrigeration and freezing apparatus is denoted by R, $L*T > 500*R$, and the ultraviolet transmittance measured when the glass panel at the lower surface of the vacuum insulated glass plate to the top glass plate are deemed to be one glass unit is lower than or equal to 5%. This can suppress the situation that the reflection of light from an exterior lighting fixture at the glass unit prevents an item stored in the interior of the refrigeration and freezing apparatus from not being viewable externally.

Further, while a glass configuration makes the interior easily viewable, an item (e.g., wine) stored in the interior of the refrigeration and freezing apparatus can be prevented from being impaired by ultraviolet light even in an environment in which the ultraviolet light of sunlight or the like enters the interior of the refrigeration and freezing apparatus. The ultraviolet transmittance is more preferably lower than or equal to 1%. Note that the visible light transmittance, the visible light reflectance, and the ultraviolet transmittance may be measured by a method defined in ISO9050:2003. To meet these conditions, for example, ultraviolet shielding glass panels may be employed as the glass panels (the glass substrates) included in the vacuum insulated glass plate and/or the top glass plate. Moreover, these conditions can be met by forming a laminated glass panel by providing an intermediate film having high ultraviolet absorptance between the vacuum insulated glass plate and the top glass plate. Note that when the ultraviolet transmittance is lower than or equal to 5%, in particular, lower than or equal to 1%, using an ultraviolet shielding glass panel leads to degraded visibility of the interior of the refrigeration and freezing apparatus, for example, a bluish view as compared with a normal glass panel. Therefore, it is more desirable that forming the laminated glass panel by providing the intermediate film having the high ultraviolet absorptance between the vacuum insulated glass plate and the top glass plate, thereby achieving that $L*T > 500*R$ and the ultraviolet transmittance is lower than or equal to 5%, more desirably lower than or equal to 1%. Such a configuration enables the item stored in in the interior of the refrigeration and freezing apparatus to be suppressed from being deteriorated by the ultraviolet light while increasing the visibility of the interior of the refrigeration and freezing apparatus, and additionally provides the effect of preventing the top glass plate from shattering when the top glass plate is broken, thereby increasing the safety. Moreover, providing at least one intermediate film outside the refrigeration and freezing apparatus r viewed from the vacuum insulated glass plate enables thermal energy by the ultraviolet light absorbed by the intermediate film to be shielded by the vacuum insulated glass plate and to be prevented from entering the interior of the refrigeration and freezing apparatus. This enables the temperature in the interior of the refrigeration and freezing apparatus to be more easily controlled. As the intermediate film, for example, polyvinyl butyral (PVB) or an ethylene vinyl acetate (EVA) copolymer resin may be used. Note that the vacuum insulated glass plate and the top glass plate do not necessarily have to be formed into the laminated glass panel, but, for example, a film having an ultraviolet shielding function (e.g., a PET film) may be affixed to the top glass plate and/or the vacuum insulated glass plate (desirably on an upper surface side) to achieve an ultraviolet transmittance lower than or equal to 5% and to prevent the top glass plate and/or the vacuum insulated glass plate from shattering.

As an example, a plurality of vacuum insulated glass plates may be affixed to the top plate.

As an example, a cover, a chromic material, or a liquid crystal shutter may be further provided so that the interior temperature does not excessively increase in case of irradiation with sunlight.

A transparent seal may be affixed to the top of the top plate part.

The glass panel may be partially opaque.

Between the top plate and the vacuum insulated glass plate, a dry material may be disposed. The space between the top plate and the vacuum insulated glass plate may be closed, may be in communication with external air, or may be switchable between a state where the space is in communication with the external air and a state where the space is not in communication with the external air.

The refrigeration and freezing apparatus may be configured to enable an RFID tag for theft prevention to work when the RFID tag is attached to an item in the interior of the refrigeration and freezing apparatus. Moreover, the refrigeration and freezing apparatus may be configured to allow the RFID tag to be switched between enabled and disabled states.

Buckling of the vacuum insulated glass plate may be compensated by achieving a negative pressure in the interior of the refrigeration and freezing apparatus.

(Aspects)

The present specification discloses the following aspects.

A cooling/warming apparatus (1, 1A, 1B, 1C, 1D, 1E, 1F, 1G, 1H) of a first aspect includes a body case (2, 2A, 2B, 2C, 2D, 2F, 2G) and a vacuum insulated glass plate (4, 4A, 4B, 4C, 4D, 4E, 4F, 4H). The vacuum insulated glass plate (4, 4A, 4B, 4C, 4D, 4E, 4F, 4H) is attached to an upper surface of the body case (2, 2A, 2B, 2C, 2D, 2F, 2G). The vacuum insulated glass plate (4, 4A, 4B, 4C, 4D, 4E, 4F, 4H) has a thermal transmittance less than 1.4 W/m$^2$·K and is attached to the body case (2, 2A, 2B, 2C, 2D, 2F, 2G) at an angle smaller than or equal to 60° with respect to a horizontal plane.

With this aspect, keeping the thermal transmittance of the vacuum insulated glass plate (4, 4A, 4B, 4C, 4D, 4E, 4F, 4H) low enables an item in the interior of the cooling/warming apparatus to be efficiently kept cool or warm. The thermal transmittance is less likely to be varied depending on the installation angle of the vacuum insulated glass plate (4, 4A, 4B, 4C, 4D, 4E, 4F, 4H). Thus, also when the vacuum insulated glass plate (4, 4A, 4B, 4C, 4D, 4E, 4F, 4H) is installed at an angle smaller than or equal to 60° with respect to the horizontal plane, the thermal transmittance of the vacuum insulated glass plate (4, 4A, 4B, 4C, 4D, 4E, 4F, 4H) can be set to be less than 1.4 W/m$^2$·K.

In a cooling/warming apparatus (1B, 1C, 1D) of a second aspect referring to the first aspect, the body case (2B, 2C, 2D) has a covering part (223B, 223C, 223D) covering an upper surface of a peripheral edge of the vacuum insulated glass plate (4B, 4C, 4D).

With this aspect, the covering part (223B, 223C, 223D) suppresses the vacuum insulated glass plate (4B, 4C, 4D) from buckling. As a result, the vacuum insulated glass plate (4B, 4C, 4D) is less likely to pop out of the body case (2B, 2C, 2D).

In a cooling/warming apparatus (1B) of a third aspect referring to the first or second aspect, when a thickness of the vacuum insulated glass plate (4B) is denoted by t1 (m), a long side length of the vacuum insulated glass plate (4B) is denoted by W1 (m), a short side length of the vacuum insulated glass plate (4B) is denoted by D1 (m), a shortest distance between an apex of the covering part (223B) and the vacuum insulated glass plate (4) is denoted by h1 (mm), and a lowest set temperature in an interior of the body case (2B) is denoted by T1 (°C), $h1 > (1.85\sqrt{W1^2 + D1^2} - 0.579)*\sqrt{(T1 - 25)^2}/(1000*t1)$ is satisfied.

With this aspect, when an item is placed on the vacuum insulated glass plate (4B) and the item may roll on the vacuum insulated glass plate (4B), the item is readily supported by an inner peripheral end face of the covering part (223B).

In a cooling/warming apparatus (1D) of a fourth aspect referring to any one of the first to third aspects, the vacuum insulated glass plate is a fixed glass plate directly attached to the body case. The cooling/warming apparatus (1D) further includes a buffer layer (32D) disposed under the vacuum insulated glass plate (4D). when a thickness of the vacuum insulated glass plate (4D) is denoted by t1 (m), a long side length of the vacuum insulated glass plate (4D) is denoted by W1 (m), a short side length of the vacuum insulated glass plate (4D) is denoted by D1 (m), a lowest set temperature in an interior of the cooling/warming apparatus is denoted by T1 (°C), and a thickness of the buffer layer (32D) is denoted by b1 (mm), $b1 > (1.85\sqrt{W1^2 + D1^2} - 0.579)*\sqrt{(T1 - 25)^2}/(1000*t1)$ is satisfied.

With this aspect, buckling of the vacuum insulated glass plate (4D) can be absorbed by the buffer layer (32D). As a result, a gap between the body case and an end of the vacuum insulated glass plate (4D) due to thermal buckling is less likely to be formed, thereby preventing degradation of the thermal insulation properties.

In a cooling/warming apparatus (1, 1A, 1B, 1C, 1D, 1E, 1F, 1G, 1H) of a fifth aspect referring to any one of the first to fourth aspects, the vacuum insulated glass plate (4, 4A, 4B, 4C, 4D, 4E, 4F, 4H) includes a pair of glass substrates (15, 15E, 15F, 16, 16E, 16F) and a plurality of pillars (19, 19E, 19F, 19H) disposed between the pair of glass substrates (15, 15E, 15F, 16, 16E, 16F). The plurality of pillars (19, 19E, 19F, 19H) each have a height hp1 greater than or equal to 50 μm.

With this aspect, an interference fringe is less likely to be visible, that is, the visibility of the interior of the cooling/warming apparatus is improved.

In a cooling/warming apparatus (1) of a sixth aspect referring to any one of the first to fifth aspects, one glass substrate of the pair of glass substrates is provided with an infrared reflective film. an average reflectance of the one glass panel provided with the infrared reflective film in a wavelength range from 500 nm to 760 nm is lower than 10% and is lower than an average reflectance of the other glass panel provided with no infrared reflective film.

With this aspect, the interference fringe caused due to various types of lighting fixtures can also be suppressed.

A cooling/warming apparatus (1) of a seventh aspect referring to any one of the first to sixth aspects further includes an interior lighting fixture (10) disposed in the body case (2). In a spectral distribution of light emitted from the interior lighting fixture (10), a full width at half maximum of one or a plurality of emission peaks in a range from 500 nm to 760 nm is greater than or equal to 30 nm.

With this aspect, the interference fringe is less likely to be caused in a wavelength range in which the human eye has high sensitivity.

In a cooling/warming apparatus (1) of an eighth aspect referring to any one of the first to seventh aspects, in a light source spectrum of the interior lighting fixture (10), a wavelength of a maximum peak in a range from 500 nm to 760 nm is defined as a wavelength λp. At least one glass substrate (15) of the pair of glass substrates (15, 16) is provided with at least one infrared reflective film (20). A reflectance which the at least one glass substrate (15) has and which is measured at the wavelength λp and on a side on which the infrared reflective film (20) is provided is lower than 10%.

With this aspect, an interference fringe is less likely to be visible, that is, the visibility of the interior of the cooling/warming apparatus is improved.

In a cooling/warming apparatus (1F) of a ninth aspect referring to any one of the first to eighth aspects, when a thickness of the vacuum insulated glass plate (4F) is denoted by t1 (m), a long side length of the vacuum insulated glass plate (4F) is denoted by W1 (m), a short side length of the vacuum insulated glass plate (4F) is denoted by D1 (m), a distance between a plurality of pillars (19F) of the vacuum insulated glass plate (4F) is denoted by p1 (mm), a thickness of an upper one (15) of a pair of glass substrates (15F, 16F) of the vacuum insulated glass plate (4F) is denoted by t3 (mm), and a lowest set temperature in an interior of the body case (2F) is denoted by T1 (°C),

$$0.00016*p^3/t3^3/1000 < (1.85\sqrt{W1^2 + D1^2} - 0.579) * \sqrt{(T1 - 25)^2}/(1000000 * t1 * D1)$$

is satisfied.

With this aspect, even when the vacuum insulated glass plate (4F) deforms due to thermal buckling, water on the vacuum insulated glass plate (4F) naturally flows (liquid between the plurality of pillars 19F flows outside) and is eliminated, and therefore, the visibility of the vacuum insulated glass plate (4F) is less likely to degrade.

A cooling/warming apparatus (1H) of a tenth aspect referring to any one of the first to ninth aspects further includes a top glass plate (41H) affixed to an outer side of the vacuum insulated glass plate (4H).

This aspect enables the upper portion of the cooling/warming apparatus (1H) to be flat irrespective of the thermal buckling of the vacuum insulated glass plate (4H).

A cooling/warming apparatus (1D) of an eleventh aspect referring to any one of the first to ninth aspects further includes a top glass plate (41D) disposed outside, and apart from, the vacuum insulated glass plate (4D).

This aspect enables the upper portion of the cooling/warming apparatus (1D) to be flat irrespective of the thermal buckling of the vacuum insulated glass plate (4D).

**Reference Signs List**

| | |
|---|---|
| 1, 1A to 1H: | Refrigeration and Freezing Apparatus (Cooling/Warming Apparatus) |
| 2, 2A to D, 2F to 2G: | Body Case |
| 4, 4A to 4F, 4H: | Vacuum Insulated Glass Plate |
| 10: | Lighting Device (Interior Lighting Fixture) |
| 15, 15E, 15F: | First Glass Panel (Glass Substrate) |
| 16, 16E, 16F: | Second Glass Panel (Glass Substrate) |
| 19, 19D, 19E, 19F, 19H: | Pillar |
| 20: | Low-Emissivity Film (Infrared Reflective Film) |
| 32D: | Buffer Layer |
| 41D, 41H: | Top glass plate |
| 223B to 223D: | Upper Support (Covering Part) |

**Claims**

1. A cooling/warming apparatus comprising:

   a body case; and
   a vacuum insulated glass plate attached to an upper end of the body case;
   the vacuum insulated glass plate having a thermal transmittance less than 1.4 W/m²·K and being attached to the body case at an angle smaller than or equal to 60° with respect to a horizontal plane.

2. The cooling/warming apparatus of claim 1, wherein
   the body case has a covering part covering an upper surface of a peripheral edge of the vacuum insulated glass plate.

3. The cooling/warming apparatus of claim 1 or 2, wherein
   when a thickness of the vacuum insulated glass plate is denoted by t1 (m), a long side length of the vacuum insulated glass plate is denoted by W1 (m), a short side length of the vacuum insulated glass plate is denoted by D1 (m), a shortest distance between an apex of the covering part and the vacuum insulated glass plate is denoted by h1 (mm), and a lowest set temperature in an interior of the body case is denoted by T1 (°C),

$$h1 > (1.85\sqrt{(W1^2 + D1^2)} - 0.579) * \sqrt{(T1 - 25)^2/(1000*t1)}$$

   is satisfied.

4. The cooling/warming apparatus of any one of claims 1 to 3, wherein

   the vacuum insulated glass plate is a fixed glass plate directly attached to the body case,
   the cooling/warming apparatus further includes a buffer layer disposed under the vacuum insulated glass plate, and
   when a thickness of the vacuum insulated glass plate is denoted by t1 (m), a long side length of the vacuum insulated glass plate is denoted by W1 (m), a short side length of the vacuum insulated glass plate is denoted by D1 (m), a lowest set temperature in an interior of the cooling/warming apparatus is denoted by T1 (°C), and a thickness of the buffer layer is denoted by b1 (mm),

$$b1 > (1.85\sqrt{(W1\text{^}2 + D1\text{^}2)} - 0.579)*\sqrt{(T1 - 25)\text{^}2/(1000*t1)}$$

is satisfied.

5. The cooling/warming apparatus of any one of claims 1 to 4, wherein the vacuum insulated glass plate includes

a pair of glass substrates and
a plurality of pillars disposed between the pair of glass substrates, and the plurality of pillars each have a height hp1 greater than or equal to 50 $\mu$m.

6. The cooling/warming apparatus of any one of claims 1 to 5, wherein

one glass substrate of the pair of glass substrates is provided with an infrared reflective film, and
an average reflectance of the one glass panel provided with the infrared reflective film in a wavelength range from 500 nm to 760 nm is lower than 10% and is lower than an average reflectance of the other glass panel provided with no infrared reflective film.

7. The cooling/warming apparatus of any one of claims 1 to 6, further comprising an interior lighting fixture disposed in the body case, wherein
in a spectral distribution of light emitted from the interior lighting fixture, a full width at half maximum of one or a plurality of emission peaks in a range from 500 nm to 760 nm is greater than or equal to 30 nm.

8. The cooling/warming apparatus of any one of claims 1 to 7, wherein

in a light source spectrum of the interior lighting fixture, a wavelength of a maximum peak in a range from 500 nm to 760 nm is defined as a wavelength $\lambda$p,
at least one glass substrate of the pair of glass substrates is provided with an infrared reflective film, and
the at least one glass substrate has a reflectance lower than 10% measured at the wavelength $\lambda$p and on a side on which the infrared reflective film is provided.

9. The cooling/warming apparatus of any one of claims 1 to 8, wherein
when a thickness of the vacuum insulated glass plate is denoted by t1 (m), a long side length of the vacuum insulated glass plate is denoted by W1 (m), a short side length of the vacuum insulated glass plate is denoted by D1 (m), a distance between a plurality of pillars of the vacuum insulated glass plate is denoted by p1 (mm), a thickness of an upper one of a pair of glass substrates of the vacuum insulated glass plate is denoted by t3 (mm), and a lowest set temperature in an interior of the body case is denoted by T1 (°C),

$0.00016*p\text{^}3/t3\text{^}3/1000 < (1.85\sqrt{(W1\text{^}2 + D1\text{^}2)} - 0.579) * \sqrt{(T1 - 25)\text{^}2/(1000000 * t1 * D1)}$

is satisfied.

10. The cooling/warming apparatus of any one of claims 1 to 9, further comprising a top glass plate affixed to an outer side of the vacuum insulated glass plate.

11. The cooling/warming apparatus of any one of claims 1 to 9, further comprising a top glass plate disposed outside, and apart from, the vacuum insulated glass plate.

*FIG. 1*

FIG. 2

## FIG. 3

FIG. 4

FIG. 5

# FIG. 6

FIG. 7

*FIG. 8*

FIG. 9

## FIG. 10

FIG. 11

# FIG. 12

*FIG. 13*

FIG. 14

**FIG. 15**

FIG. 16

FIG. 17

FIG. 18

## INTERNATIONAL SEARCH REPORT

| International application No. |
|---|
| **PCT/JP2023/037651** |

| A. CLASSIFICATION OF SUBJECT MATTER |
|---|
| ***A47F 3/04***(2006.01)i; ***F25D 11/00***(2006.01)i; ***F16L 59/065***(2006.01)i<br>FI:   A47F3/04 D; F16L59/065; F25D11/00 101U |
| According to International Patent Classification (IPC) or to both national classification and IPC |

| B. FIELDS SEARCHED |
|---|
| Minimum documentation searched (classification system followed by classification symbols)<br>     A47F3/04; F25D11/00; F16L59/065 |
| Documentation searched other than minimum documentation to the extent that such documents are included in the fields searched<br>     Published examined utility model applications of Japan 1922-1996<br>     Published unexamined utility model applications of Japan 1971-2023<br>     Registered utility model specifications of Japan 1996-2023<br>     Published registered utility model applications of Japan 1994-2023 |
| Electronic data base consulted during the international search (name of data base and, where practicable, search terms used) |

| C. | DOCUMENTS CONSIDERED TO BE RELEVANT | |
|---|---|---|
| Category* | Citation of document, with indication, where appropriate, of the relevant passages | Relevant to claim No. |
| Y | JP 7-35467 A (SANYO ELECTRIC CO LTD) 07 February 1995 (1995-02-07)<br>     paragraphs [0012]-[0015], fig. 1-4 | 1-11 |
| Y | JP 2022-549889 A (PEPSICO, INC.) 29 November 2022 (2022-11-29)<br>     paragraphs [0053]-[0056], fig. 7-9 | 1-11 |
| Y | JP 2021-35895 A (SHOWA DENKO MATERIALS CO LTD) 04 March 2021 (2021-03-04)<br>     paragraphs [0004], [0022]-[0030], [0035], fig. 1 | 1-11 |
| Y | JP 2004-105453 A (ZOJIRUSHI CORP) 08 April 2004 (2004-04-08)<br>     paragraph [0013] | 7-11 |
| Y | JP 2006-83675 A (MIYAZAKI, Masayasu) 30 March 2006 (2006-03-30)<br>     paragraphs [0013]-[0014], fig. 1 | 10-11 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 December 2023** | **26 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/037651**

| Patent document cited in search report | | | Publication date (day/month/year) | Patent family member(s) | | | Publication date (day/month/year) |
|---|---|---|---|---|---|---|---|
| JP | 7-35467 | A | 07 February 1995 | US | 5428968 | A | |
| | | | | column 3, line 26 to column 4, line 2, fig. 1-4 | | | |
| | | | | EP | 635689 | A2 | |
| JP | 2022-549889 | A | 29 November 2022 | US | 2021/0095915 | A1 | |
| | | | | paragraphs [0053]-[0056], fig. 7-9 | | | |
| | | | | WO | 2021/061524 | A1 | |
| | | | | EP | 4034824 | A1 | |
| | | | | CN | 114502903 | A | |
| | | | | AU | 2020356360 | A1 | |
| | | | | CA | 3155012 | A1 | |
| JP | 2021-35895 | A | 04 March 2021 | WO | 2021/038907 | A1 | |
| | | | | paragraphs [0004], [0022]-[0030], [0035], fig. 1 | | | |
| JP | 2004-105453 | A | 08 April 2004 | (Family: none) | | | |
| JP | 2006-83675 | A | 30 March 2006 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP H07035467 A